(19) **Europäisches Patentamt**

**European Patent Office**

**Office européen des brevets**

(11) **EP 1 443 460 A1**

(12) **EUROPEAN PATENT APPLICATION**

(43) Date of publication:
**04.08.2004 Bulletin 2004/32**

(51) Int Cl.⁷: **G06T 7/20**, G08B 13/194

(21) Application number: **03425064.7**

(22) Date of filing: **03.02.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (72) Inventors:<br>• **Sarti, Augusto**<br>  **20038 Seregno (Milano) (IT)**<br>• **Tubaro, Stefano**<br>  **28100 Novara (IT)** |
| (71) Applicant: **C.F.D. Elettronica S.P.A.**<br>**20122 Milano (IT)** | (74) Representative: **Ponzellini, Gianmarco**<br>**Bugnion S.p.A.**<br>**Viale Lancetti 17**<br>**20158 Milano (IT)** |

(54) **A process for digital image processing, in particular in the video monitoring field**

(57) A process for digital image processing, in particular for applications in the video monitoring field, comprises a step of detecting a first digital image and at least one second digital image. The process further comprises the steps of comparing the first and second digital images to detect at least one variation between the same, and selecting an analysis region, in said second image, including said variation. Then at least one operating parameter of the analysis region is detected; associated with the operating parameter through a fuzzy-logic algorithm is a fuzzy-logic parameter representative of the nature of the detected variation. Depending on the fuzzy-logic parameter, a notification signal is generated which is representative of the fuzzy-logic parameter itself.

**Fig.1a**

f1

EP 1 443 460 A1

**Description**

The present invention relates to a process for digital image processing, in particular for applications in the video monitoring field.

It is known that there are different types of algorithms and apparatus than can be used in the video monitoring field, i.e. that are set to detect a predetermined number of images, generally in a digital format, process them and ultimately deliver an alarm signal upon occurrence of a predetermined event.

In particular, the events that can be notified to the operator concern variations of great importance such as access to private areas by intruders, for example; monitoring of these intrusions is particularly useful for dwellings, at the moments the tenants are not therein, or for any type of installations and structures requiring to be watched over, especially overnight.

The systems of known type use television cameras or video cameras for detection of the images to be processed; these images can be either directly detected by a digital device or detected by a device of the analog type, and subsequently converted to a digital format.

Presently, for detecting possible alarm situations (intrusions), first of all a comparison is carried out, through a difference for example, between images in succession; this comparison may concern the light intensity value assigned to each pixel of the two images, for example.

The simplest systems, should a difference of a certain amount be ascertained, only signal the existence of a situation of potential danger through an appropriate alarm, without further investigation or without carrying out an in-depth analysis of the available data.

It is well apparent that the systems of this type, generally employed in applications of the domestic type, are not very reliable and can produce quite groundless alarms (in case of simple illumination variations, for example).

Therefore more sophisticated algorithms have been worked out that, in addition to detection of variations within the monitored area, also involve "tracking" and classification steps.

"Tracking" consists in putting the variations detected in a succession of images into mutual time relationship, i.e. in associating the detected changes in a predetermined image with the changes detected in the preceding or following images, so as to trace the trajectories of possible movements occurred within the concerned area.

Classification, on the contrary, consists in establishing whether some of the detected movements during the preceding steps can be traced back to the movement of a human and therefore to the movement of an intruder.

In other words, the fundamental task of the most sophisticated systems consists in discriminating between variations caused by banal changes in brightness or due to shifting of small objects, and variations due to movement of humans within the monitored region.

The classification operation is presently performed through neural networks that however always have the problem of defining the structure and typology (i.e. the number of neurons and layers) in a correct manner; alternatively, statistical instruments are employed, such as maximum-likelihood operators; however, both neural networks and maximum-likelihood estimators have a drawback, i.e. they are too much specialised so that they carry out reliable detections and analyses only under particular statistical conditions.

In other words, neural networks and maximum-likelihood estimators are characterised by a very limited flexibility of use.

Another possible track to be followed is to evaluate the displacement field of the detected objects and compare it with a data bank of previously stored values, in order to classify the displacement typology and assign it to an object, a human, etc.

A drawback joining the above described classification techniques concerns the excessive computational complexity of the employed algorithms, that inevitably adversely affects the time required for the processing operations; alternatively, very expensive electronic devices having particular qualities in terms of calculation ability and adapted to perform the required operations in acceptable time intervals, would be necessary.

Therefore, in the absence of sufficiently sophisticated apparatus and since the detected images are required to be processed rather quickly, the systems of known type turned out to be quite inadequate and unreliable for an effective and complete real-time monitoring of a predetermined area of interest.

Another process of known type consists in detecting one or more parameters describing the images and the respective variations, and in comparing the same with a predetermined number of previously stored values, generating an alarm signal when the reference values are overcome.

The systems of this type, generally referred to as "threshold systems", however, are not particularly reliable, above all when situations occur in which the intruder is partly covered or hidden by other elements (e.g. immovable objects) within the visual field.

It is an object of the present invention to solve the above mentioned drawbacks.

In particular, the invention aims at providing a process for digital image processing, in particular for application in the video monitoring field, capable of analysing the detected images in an effective manner, reliably discriminating between the variations of the geometrical type (i.e. caused by real displacements) and the variations of the radiometric type (concerning mere variations in illumination) within the visual field.

It is a further aim of the invention to provided a process for image processing which is able to reliably detect the presence of intruders, even if partly covered, within a predetermined region of space.

Another aim of the present invention is to make available a process for digital image processing which is able to supply detailed information concerning the degree of the geometric character of the detected variations.

A still further aim of the invention is to make available a reliable process for digital image processing that is not too complicated under the computational point of view and therefore can be efficiently used also on apparatus that are not very expensive.

The foregoing and further aims are substantially achieved by a process for digital image processing, in particular for applications in the video monitoring field, in accordance with the features recited in the appended claims.

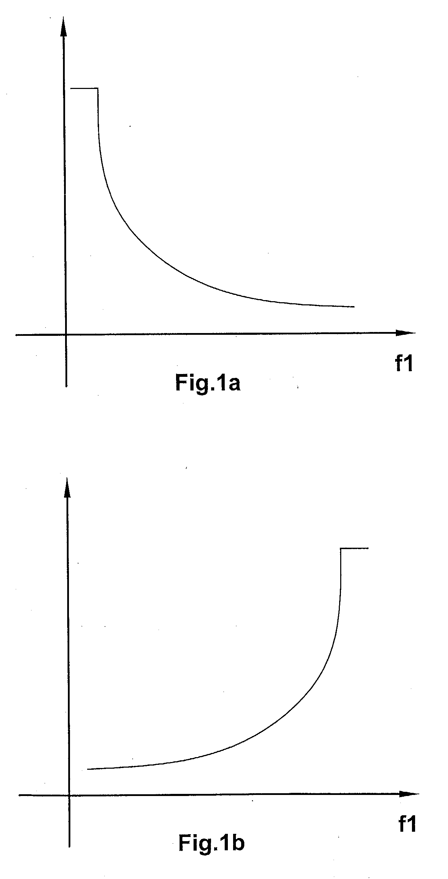

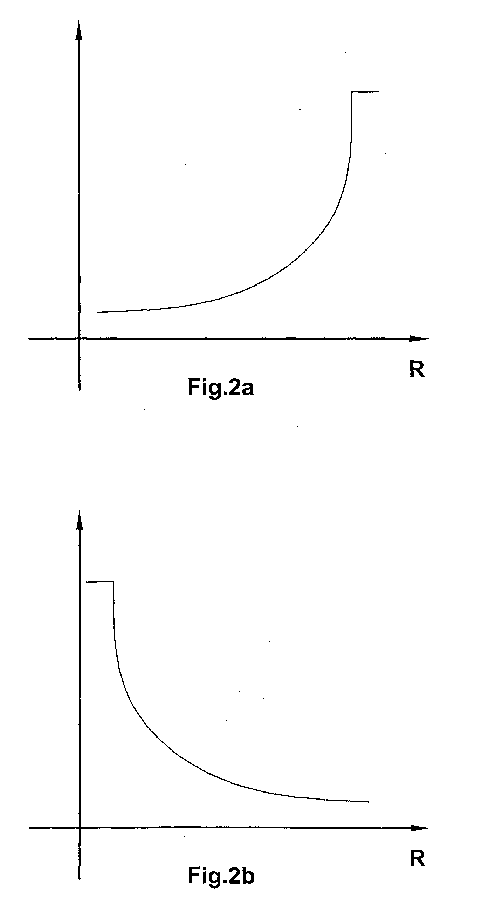

Further features and advantages will become more apparent from the description of a preferred but not exclusive embodiment of a process for digital image processing, in particular for applications in the video monitoring field, depicted in the accompanying Figs. 1a, 1b, 2a, 2b, 3a, 3b, 4a and 4b showing the qualitative course of functions employed in the process in accordance with the present invention.

The present invention refers to a process for digital image processing, in particular for applications in the video monitoring field; as above mentioned, this typology of process has the task of analysing a series of images, preferably in a digital format, and distinguish, within the same, the variations and/or movements of a certain amount that can be traced back to the presence of an intruder in a predetermined area.

The process first of all comprises a step of detecting a first digital image and, subsequently, a second digital image; the two images are a reproduction of a predetermined region of space that must be monitored.

This detecting step can be carried out both with devices that are able to directly generate images in a digital format, starting from the light radiation incident on the detecting elements (digital video cameras, webcams, etc.), and with analog detecting devices (e.g. traditional television cameras), associated with appropriate converters capable of obtaining images in a digital format by processing corresponding images of the analog type.

In particular, the image detection can be carried out by means of C-MOS devices that, with respect to other technologies, have reduced production costs, the possibility of integrating all functions necessary to the television camera into the same chip, low consumptions, high dynamics and high acquisition velocity.

The first digital image that will act as the reference image for the processing to be described hereinafter, can be selected following different modalities: in a first embodiment, it can be the first image detected by the system at the moment of activation of same; alternatively, it can be a background image that is constantly updated, depending on possible illumination variations or other variations of slight extent.

At all events, each of the two images is formed of a predetermined number of pixels and associated with each of said pixels is at least one brightness parameter; this parameter is indicative of the light intensity of the image at the pixel with which the parameter is associated.

Practically, each digital image is represented through a matrix of parameters, each of which expresses the light intensity of the image at a precise point.

Should the analysis be carried out on colour images, in addition to said brightness parameter two chromatic components can be associated with each pixel, so as to define the three-stimulus components for each pixel (e.g. RGB).

Therefore, in case of colour images, the hereinafter described processing will be carried out not only on the brightness parameter, but also on each auxiliary chromatic component.

The first and second images are compared with each other, in order to detect a substantial variation between said images, in connection with the predetermined region of space they represent; should this variation be detected, an in-depth analysis of the differences between the two images is carried out to ascertain the change typology.

In more detail, in a preferred embodiment, the difference between the illumination parameters associated with the pixels of the second image and the illumination parameters associated with the corresponding pixels of the first image is carried out; thus, depending on this difference, a difference matrix is generated which has the same sizes as the first and second digital images and is defined by said difference operation: should the difference between one pixel of the second image and the corresponding pixel of the first image be greater than a predetermined threshold value, the resulting value to be positioned within the difference matrix would be set to be 1; vice versa, should the difference be smaller than the threshold value, the resulting value to be positioned within the difference matrix would be set to be 0.

Therefore the difference matrix is substantially a matrix made up of binary values, in which the points (or regions) having a unitary value represent variations of the second digital image with respect to the first image.

It is important to point out that, depending on requirements, the difference matrix can be obtained following different processes.

It may be for example supposed that the first digital image is a starting reference image, detected as soon as the system is activated; in addition to a comparison between the first and second images, a further comparison (through the difference) may be provided between the second image and an intermediate image detected just before the second image itself.

Then a comparison is carried out between the corresponding results of each pair of subtractions and, after selecting the greater of the two results, the latter is inserted in the difference matrix.

Depending on the specific applications of the system, the difference between the first and second images and the difference between the second image and the intermediate image can be evaluated with different weights, depending on whether the attention is the be focused on "statistical" variations (difference between the first and second images) or on dynamic variations (difference between the second image and the intermediate image).

Generally, at all events, the first digital image can be both a starting image acting as an absolute reference for slow variations, and a dynamic image detected few fractions of a second before the second image, so as to act as a relative reference for quick variations.

In order to eliminate the noise and possible trouble present in the difference matrix at least partially and to evaluate in an optimal manner which can be the variations of some importance, the difference matrix itself is submitted to a filtering step, preferably by means of morphological operators such as erosion and dilatation.

A morphological operator is an operator that is applied to a digital image (i.e. to the parameter matrix representing it), carrying out scanning of same with a "structural element", i.e. a sort of mask having predetermined shape and sizes; in particular, the structural element generally has a regular (square, elliptical, cruciform) shape and sizes much smaller than the image to be processed.

By sliding the structural element on the image to be processed, a certain number of pixels are selected each time; by performing a predetermined number of logical operations between the parameters associated with the selected pixels and those composing the structural element, an image different from the starting one is obtained, which image represents the result of the operation.

In more detail, a dilatation in the case of binary images may consist in defining a structural element formed of pixels having value 1 and in carrying out an operation of the OR type among the pixels of the structural element itself and those selected in succession in the image to be processed (in the latter image, the regions of interest are represented by areas of pixels of a unitary value); in a quite dual manner, an erosion consists in carrying out an operation of the AND type.

Starting from these two fundamental operators, by suitably combining them, it is possible to obtain derived operators among which the morphological opening and morphological closure hold an important meaning in this context.

A morphological opening is obtained by applying in succession, onto a predetermined image, first an erosion and then a dilatation: the erosion has the task of eliminating the small point smudges with a unitary value (the so-called noise of the "salt" type), at the same time "eroding" the contours of the areas of a unitary value of significant dimensions; the subsequent dilatation aims at returning the unitary areas of greater dimensions to the original ones.

Vice versa, in a morphological closing the application order of the two operators is reversed: dilatation initially has the task of removing the small regions of zero value, that disturb the significant areas of unitary value (noise of the so-called "pepper" type); the subsequent erosion limits the distortional effect caused by dilatation on the contours of the unitary-value regions.

Therefore, by applying one or more of the above described morphological operators, it is possible to more clearly define which is/are the region/s of interest within the difference matrix (i.e. the significant variations, those represented by pixel groups of unitary value).

Once the true variations represented in the difference matrix have been identified, in the second digital image an analysis region is selected the pixels of which occupy the same position as the pixels of unitary value in the difference matrix, after the latter has been conveniently filtered.

Therefore, said analysis region holds at least one of the detected variations; in a preferred embodiment, this analysis region has a rectangular shape. Each pixel of the analysis region is associated with a respective pixel of the first digital image and, more specifically, to the pixel that in the first digital image occupies the same position.

Practically, each of the variations that still are in the second digital image after the latter has been submitted to filtering through the above mentioned morphological operators, is inserted into a respective analysis region that will be processed to thoroughly analyse the amount of this variation.

It is important to point out that, theoretically, the analysis region could be fully coincident with the second image and the analysis could be performed with reference to the whole second digital image; however, it is advantageous for the processing to be limited to change regions in order to reduce the computational weight of the processing itself and make the process as quick as possible.

In the following the process is described in connection with a single analysis region; it is however apparent that, in order to be able to obtain a reliable video monitoring system, each of the identified analysis regions must be processed in an appropriate manner.

Therefore, after one analysis region has been selected, a first operating parameter of the same analysis region is detected; this first operating parameter, as clarified in the following, is representative of the morphological features of the first analysis region.

In more detail, first of all a ratio is calculated between the parameters associated with the pixels of the analysis region and the corresponding pixels of the first digital image; in other words, for each pixel of the analysis region, the corresponding pixel of the first image is selected and the ratio between the brightness parameters associated with the two pixels is calculated.

A ratio operation between said brightness parameters is particularly advantageous taking into account a mathematical modelling of illumination of the objects proposed by Phong.

In this model (described in detail in K. Skistad, R, Jain "Illumination Independent Change Detection for Rearl World Image Sequences" *Computer Vision, Graphics, and Image Processing,* 1989 Vol. 46 pages 387-399), the light-intensity value associated with each pixel can be expressed as the product of a component I, representative of the overall illumination incident on such a pixel, and a component S, exclusively depending on the physical features of the surface of the object of which the pixel is part.

Therefore, by evaluating the ratio between the brightness parameters associated with the same pixel considered in two images in succession (in the case under examination, the first and second digital images), it is possible to go back to the cause of a possible variation: if no variation occurs in the physical structure of the object represented, i.e. if the two components S are equal, then the ratio between the two brightness parameters coincide with the ratio between the two components I; if, on the contrary, the physical structure of the object varies, the ratio between said brightness parameters will be no longer equal to the ratio between the two illumination components I.

Extending the above considerations to all pixels included in the analysis region, it is therefore possible to recover important information on variations taking place within the monitored area.

Thus, if a ratio between the brightness parameters of the first and second image is carried out, a corresponding matrix of ratios is obtained; the first operating parameter will be representative of such a matrix of ratios in accordance with the modalities described in the following.

At this point a first brief and perfunctory evaluation of the amount and nature of the detected variation can be done.

In fact the arithmetic mean and related variance of the whole elements forming the ratio matrix can be calculated; should the mean be higher than a predetermined threshold and the variance smaller than a corresponding reference value, occurrence of a brightness variation would be likely. On the contrary, should the variance value overcome the reference value, independently of the value taken by the mean, probably the variation would be caused by the displacement of some object on the scene.

To improve the detection reliability, the operations described herebelow are performed.

First of all a filtering of the ratio matrix of the high-pass type is carried out; this means that, considering the succession of samples defined by the ratios contained in said ratio matrix, this sample succession is filtered, thereby obtaining a corresponding high-pass matrix.

In a preferred embodiment, the high-pass matrix is obtained as a matrix of variances relating to said ratio matrix.

In more detail, within the ratio matrix, all ratios, i.e. all pixels of this matrix, are selected in succession, one by one; each of the matrices that are processed during the process, in fact, can be graphically represented, by associating one pixel with each matrix element and causing the parameter present in the matrix to define a magnitude (the light intensity, for example) which is characteristic of the pixel associated therewith. Consequently, for each matrix, reference can be indifferently made to "matrix elements" or "pixels" as they are equivalent.

For each predetermined pixel selected, it is also selected a preestablished number of auxiliary pixels, each adjacent to the predetermined pixel; by way of example, a square region can be defined which has a side dimension equal to 3 pixels, centred on the predetermined pixel; if the computational capacities of the adopted system make it possible, and should a more detailed analysis be required, a set of additional pixels non-adjacent to the predetermined pixel but adjacent to at least one auxiliary pixel can be disposed alongside the auxiliary pixels.

It is apparent that, in this way, the sizes of the region defined in the neighbourhood of the predetermined pixel can be further increased, depending on current requirements and the features of the hardware therein employed.

After defining the set formed of the predetermined pixel, the auxiliary pixels and possible additional pixels, a local mean preferably of the arithmetic type is calculated between the ratios associated with the selected pixels; this mean is identified as "local mean" exactly because it is calculated in a limited region, defined in the neighbourhood of the predetermined pixel selected.

In a subsequent step, a local variance with respect to said local mean is calculated, i.e. the variance of all selected ratios in the neighbourhood of the predetermined pixel; more particularly, the local variance is calculated as follows:

$$\sigma^2 = \frac{1}{N-1} \sum_{p \in A} \left( \frac{I_{p1}}{I_{p2}} - \mu \right)^2$$

wherein:

$\sigma^2$    represents the local variance
N    represents the number of pixels selected for calculation of the local variance
A    represents the selected region for calculation of the local variance, formed of N pixels
p    represents each of the selected pixels
$I_{p1}$    represents the brightness parameters of each of the selected pixels in the first image
$I_{p2}$    represents the brightness parameters of each of the selected pixels in the second image
$\mu$    represents the local mean relating to region A.

As above mentioned, all pixels of the ratio matrix are provided to be selected in succession, and to cover the role of "predetermined pixel selected"; in this way, starting from the ratio matrix, a corresponding variance matrix is obtained which defines said high-pass matrix.

To calculate said first operating parameter, then a first morphological operator is applied to the high-pass matrix, through a first structural element; practically, a morphological opening is carried out, with a first structural element preferably of square shape and typical side dimension equal to 3 pixels; in this way a first intermediate matrix is obtained as the resultant matrix.

In a quite similar manner a second morphological operator is applied still to the high-pass matrix, through a respective structural element; the second operator too is a morphological opening. The structural element employed is preferably a square one, with a side dimension which is 1 or 2 pixels greater than that of the first structural element; therefore, in the preferred embodiment, the second structural element will have a side dimension of 5 pixels.

Once said two morphological operators are applied, the first and second intermediate matrices are compared and, depending on such a comparison, a notification signal is generated.

In more detail, a first area of the first intermediate matrix and a second area of the second intermediate matrix are calculated; the two areas are preferably calculated as moments of zero order of the first and second intermediate matrices respectively, in accordance with the following formula:

$$m = \sum_{p \in X} I_p$$

wherein:

m    represents the area, i.e. the moment of zero order
p    represents each of the elements of the matrix herein considered
X    represents the matrix of which the area is calculated
$I_p$    represents the value of each matrix element.

In this particular case, the first operating parameter is a function of the difference between the two above mentioned areas; in the preferred embodiment, the first operating parameter is calculated as a "spectrum" of order 1 of said high-pass matrix (in particular, of the variance matrix), in accordance with the formula:

$$f1 = \frac{m(\Psi_k(Mv)) - m(\Psi_j(Mv))}{m(Mv)}$$

wherein:

f1    is the first operating parameter, i.e. the spectrum of order 1
m    represents the operation for calculation of the area, i.e. calculation of the moment of zero order

$\psi_k$    represents the morphological-opening operation by use of the first structural element, in which "k" is representative of the sizes of the first structural element

$\psi_j$    represents the morphological-opening operation by use of the second structural element, in which "j" is representative of the sizes of the second structural element

Mv    represents the high-pass matrix, i.e. the variance matrix.

In other words, the first operating parameter is calculated as the ratio between the difference of the first and second areas and the area (i.e. the moment of zero order) of the high-pass matrix.

Practically, the first operating parameter thus calculated is representative of a measure of the presence, within the considered images, of details having sizes included between the sizes of the structural elements employed.

It is now described how the notification signal is generated depending on said first operating parameter.

First of all, associated with the first operating parameter is a fuzzy-logic parameter, representative of a degree of geometrical character of the variation depicted in the analysis region of the second digital image; this means that a fuzzy-logic parameter is defined which is connected to the first operating parameter, as will be better described in the following, can take a plurality of values and represents "how much" the variation identified by the analysis region can be considered a variation of the geometrical type.

The detected variation typologies, in fact, can be substantially two in number: variations of the geometrical type, i.e. variations in the physical structure of the area represented (typically, displacements or elimination of objects present in the predetermined region of space, addition of new objects in the same region, etc.), and variations of the radiometric type, i.e. variations referring to the illumination to which the objects present on the scene are submitted, and not referring to the physical structure of same.

The fuzzy-logic parameter therefore has the task of representing the nature of the detected variation: for example, if the fuzzy-logic parameter takes a high value, the variation will be of the geometrical type (i.e. in all probability, it is ascribable to the presence of an intruder within the monitored area), whereas, if the parameter takes a low value, the variation will be of the radiometric type (due to factors different from an intrusion).

If the fuzzy-logic parameter takes intermediate values, the variation nature is not defined in an exact manner; however, the system is at all events able to supply at least one indicative evaluation concerning the detected anomaly, communicating the "degree of membership" (a concept typical of the fuzzy logic) to the whole variations of geometrical type.

It is clear that, in a quite similar manner, the fuzzy-logic parameter can be considered as representative of the degree of membership of the variation under examination to the category of the radiometric variations.

Therefore, unlike the traditional systems exclusively of the threshold type, a process employing the fuzzy logic is able to supply useful information also in the cases in which the situation is not outlined in a very clear manner.

By way of example, it is to be considered a fuzzy-logic parameter that can take values included between 0 and 1: the closest values to 0 correspond to variations of the radiometric type, whereas the closest values to 1 correspond to variations of the geometric type; if the fuzzy-logic parameter takes a value corresponding to 0.3, it means that the system has detected a variation of uncertain nature, which variation however is rather close to a radiometric variation (in particular, the variation has a 0.3 degree of membership to the category of the geometric variations, i.e. it is a variation rather close to the radiometric variations). Vice versa, if the fuzzy-logic parameter takes a value equal to 0.8, it means that the detected variation has a 0.8 degree of membership to the category of the geometric variations.

In general, to bind the operating parameter to the fuzzy-logic parameter, i.e. to evaluate the degree of geometric character of the variation detected in the second image, a fuzzy-logic algorithm is applied to the first operating parameter, to obtain said fuzzy-logic parameter.

Application of the fuzzy-logic algorithm first of all comprises definition of a first function of membership associated with the first operating parameter, of a predetermined number of fuzzy-logic rules, and of a function of membership associated with the fuzzy-logic parameter.

Each fuzzy-logic rule consists of a predetermined number of antecedents, (one for each input variable: in this case only one antecedent is provided which refers to the first operating parameter) and a predetermined number of consequents (one for each output variable: in this case only one consequent is provided, which refers to the fuzzy-logic parameter); the whole antecedents of each rule define the premise to this rule.

For example, in a rule of the type "if X is high and Y is low, then Z is high", the antecedents are "X is high" and "Y is low", and union of same forms the premise; "Z is high" is the consequent.

In a first step of fuzzy coding, in each rule, for each antecedent, a respective value of membership is calculated, through said first membership function. For example, if the antecedent is a clause of the type "parameter X is high", the detected value of this parameter is evaluated and combined with the related membership function "to be high" and a corresponding degree of truth of said antecedent is obtained.

In a subsequent deduction step, the degree of truth of each antecedent is combined with those of the antecedents of the same rule, to obtain an overall degree of truth of the premise; if only one antecedent is available, the deduction step is unnecessary, because the degree of truth of this antecedent is directly considered as the degree of truth of the whole premise.

In general, for the deduction step, two different approaches can be employed: a first approach based on the minimum, in which the membership function associated with the consequent is saturated to the value of truth taken by the rule premise, or a second approach based on the product, in which the membership function associated with the consequent is scaled down by the value taken by the premise.

At all events, the result of the deduction step consists therefore in assigning a fuzzy subset to each output variable for each rule.

Then a composition step is carried out, in which the subsets referring to the same output variable but belonging to different rules, are united together: if the deduction has been performed based on the minimum, the composition will be based on the maximum, i.e. the fuzzy subset representing the output variable will be made up, for each considered point, of the maximum value taken by all the subsets. Vice versa, if the deduction has been performed based on the product, the distribution of the output variable will be obtained through summing up of the contributions of each rule.

Finally, through a fuzzy decoding step, obtained from the membership function of 'the output variable is a numeric value generally represented by the centroid of the function.

For a specific treatment of the subject, reference can be made to the number of publications by Lofti A. Zadeh and, in particular to "Fuzzy Logic and the Calculus of Fuzzy If-Then Rules, Proceedings of SYNAPSE '91, Tokyo, Japan, 1991".

Once a numeric value for the fuzzy-logic parameter has been obtained, if necessary a notification signal is generated depending on this value.

In a first embodiment the notification signal may merely incorporate the value of the fuzzy-logic parameter, that is by itself sufficient to give an idea of the nature of the detected variation.

It is provided at all events that the fuzzy-logic parameter could be compared with a previously stored value defining a threshold for the fuzzy-logic parameter itself.

For example, the threshold can be 0: if the fuzzy-logic parameter is positive, then an alarm situation is signalled through the relevant notification signal.

At all events, even independently of the comparison with the previously stored value, the notification signal can be employed to communicate the value of the fuzzy-logic parameter to the operator in charge, thus indicating the "degree of danger" of the detected variation.

In order to improve performance of the system and supply the user with increasingly more precise and reliable information, a step of detecting a second operating parameter of the analysis region is provided; thus a second fuzzy-logic parameter is applied to the first and second fuzzy-logic parameters to obtain said output fuzzy-logic parameter.

In more detail, a second operating membership function is associated with the second operating parameter, and also defined is a predetermined number of auxiliary fuzzy-logic rules establishing a relation between the first parameter, the second parameter and the fuzzy-logic parameter through the first membership function, the second membership function, and the main membership function.

As above mentioned, each of the auxiliary rules too is formed of a premise (in turn defined by two antecedents), and of a consequent; through said fuzzy-coding, deduction, composition and fuzzy-decoding steps, then the value of the fuzzy-logic parameter is calculated depending on the first and second operating parameters.

The second operating parameter is preferably a parameter of the statistical-geometrical type, representative of said ratio matrix; more particularly, the second operating parameter is a function of the area and the perimeter of same, said area being calculated as the moment of order 0 of the ratio matrix.

The perimeter can be defined by the sum of the lengths of the sides of the ratio matrix, for example (the sides are measured in number of pixels); alternatively, the perimeter can be that of the so-called "convex hull", i.e. of the minimum convex region containing all the points of unitary value present in the ratio matrix.

In the preferred embodiment, the second operating parameter is calculated in accordance with the formula:

$$R = \frac{m}{P}$$

wherein

R    is the second operating parameter

m    is the are, i.e. the moment of order zero

P    is the relevant perimeter.

The first and second operating parameters are therefore combined to improve reliability of the system with particular reference to the "intermediate" situations, in which a mere evaluation of a single parameter does not allow the nature of the detected variations to be established with reliability.

It is to be noted that, in case both the first and second operating parameters are detected and processed, the first fuzzy-logic algorithm is not distinct and independent with respect to the second fuzzy-logic algorithm: i.e. the first and second fuzzy-logic algorithm are not separated and distinct steps of the process.

In other words, should both the first and second operating parameters be employed, said first fuzzy-logic algorithm will be coincident with the second fuzzy-logic algorithm: both, in fact, operate on the first parameter, on the first membership function associated therewith, on a predetermined number of fuzzy-logic rules and on the main membership function, to calculate the fuzzy-logic parameter.

With reference to the second algorithm, it is merely specified that in applying the fuzzy logic a second operating parameter is also processed, together with the second membership function associated therewith, in combination with the first parameter.

Likewise, the auxiliary fuzzy-logic rules coincide with those previously introduced with reference to the first operating parameter alone; these auxiliary rules merely clarify that also the second operating parameter is taken into account within the different logical propositions defining the fuzzy-logic algorithm applied.

The results obtained with the process in accordance with the present invention are still more precise if a detecting step of a third operating parameter of the analysis region is performed.

The third operating parameter is of a nature quite similar to that of said first operating parameter, said third operating parameter being representative of the ratio matrix and in particular of the above described high-pass matrix.

In more detail, the third operating parameter is a morphological parameter representative of said variance matrix.

In fact, for detecting the third operating parameter, a third morphological operator is applied to the high-pass matrix (i.e. to the variance matrix, in the preferred embodiment), through a third structural element, thereby obtaining a respective third intermediate matrix. The third structural element preferably has a square shape, having in particular a side dimension of 5 pixels.

Then a fourth morphological operator too is applied to the high-pass matrix (i.e. to the variance matrix), through a corresponding fourth structural element, thereby obtaining a respective fourth intermediate matrix; the fourth structural element preferably has a square shape, in particular having a side dimension one or two pixels bigger than said third structural element. In the preferred embodiment, the fourth structural element has a side dimension of 7 pixels.

In the same manner as above described in connection with the first and second morphological operators, the third and fourth morphological operators too are morphological openings.

The third and fourth intermediate matrices obtained as above stated are suitably compared, in order to obtain the third operating parameter.

In more detail, a third area of the third intermediate matrix and a fourth area of the fourth intermediate matrix are calculated as a moment of order 0 of the respective intermediate matrices, in accordance with the above stated formula.

The third operating parameter, in the preferred embodiment is calculated as follows:

$$f2 = \frac{m(\Psi_1(Mv)) - m(\Psi_n(Mv))}{m(Mv)}$$

wherein

$f2$     is the third operating parameter, i.e. the spectrum of order 2
$m$     represents the operation for calculation of the area, i.e. calculation of the moment of order zero
$\psi_l$     represents the morphological-opening operation with the third structural element, in which "1" is representative of the sizes of the third structural element
$\psi_n$     represents the morphological-opening operation with the fourth structural element, in which "n" is representative of the sizes of the fourth structural element
$Mv$     represents the high-pass matrix, i.e. the variance matrix.

In the light of the above description, it is apparent that the steps of applying the second and third morphological operators to said high-pass matrix can advantageously be coincident, since both operations involve application of a morphological opening with a structural element of square shape having a side dimension of 5 pixels. The second and third intermediate matrices, therefore, are coincident as they are the result of identical operations carried out on the same starting matrix.

In the same manner as above described in connection with the first operating parameter, the third operating parameter thus calculated appears to be representative of a measure of the presence, within the considered images, of details having dimensions included within the dimensions of the structural elements employed.

For the purpose of combining the information resulting from the first, second and third operating parameters, a third fuzzy-logic algorithm is applied to calculate the fuzzy-logic parameter representative of the degree of geometrical character of the variation represented in the analysis region under examination, depending on said first, second and third operating parameters.

Therefore a third operating membership function is defined, which is associated with the third operating parameter, together with a predetermined number of secondary fuzzy-logic rules; the latter put the first, second and third operating parameters in relation with the fuzzy-logic parameter, through said first, second and third operating membership functions and the main membership function.

Subsequently, steps of fuzzy coding, deduction, composition and fuzzy decoding are carried out that are quite similar to those described above with reference to the auxiliary rules, to obtain the value of the fuzzy-logic parameter.

It is important to point out that, in the same manner as discussed above in connection with the first and second fuzzy-logic algorithms, the third algorithm does not represent a succession of distinct and independent steps with respect to the first and second algorithms.

In fact, the third algorithm is coincident with the first and second ones: the third algorithm merely clarifies that also a third operating parameter together with the third membership function associated therewith, is involved in applying the fuzzy logic within the process in accordance with the present invention.

The same is also valid as regards the secondary fuzzy-logic rules that are substantially coincident with said auxiliary rules and those previously introduced with reference to the first algorithm.

In the light of the above, it is now to be considered the following recapitulative example.

The first operating parameters the spectrum of order (f1), the second operating parameter is the area/perimeter ratio (R) and the third operating parameter is the spectrum of order 2 (f2).

For each of the three operating parameters a membership function having the course of a branch of a parabola is defined; these functions are shown in Figs. 1a, 1b, 2a, 2b, 3a and 3b. In Figs. 1a, 2a and 3a in the x axis are shown the first, second and third operating parameters (f1, R and f2), respectively; in the y axis the membership function "to be high" for each of the three parameters is shown.

In Figs. 1b, 2b and 3b, on the contrary, the membership functions "to be low" are shown, with reference to said three operating parameters.

The fuzzy-logic rules linking the three operating parameters to the fuzzy-logic parameter are the following:

if R is high AND f1 is low AND f2 is high THEN the analysis region represents an intruder
if R is low AND f1 is high AND f2 is low THEN the analysis region does not represent an intruder.

As regards the output variable, the membership function has been selected of the triangular type, so that after the fuzzy-decoding operation a positive value is obtained if the first rule prevails, a negative value if the second rule prevails; if the two rules have the same importance, the value assigned to the output variable will be zero.

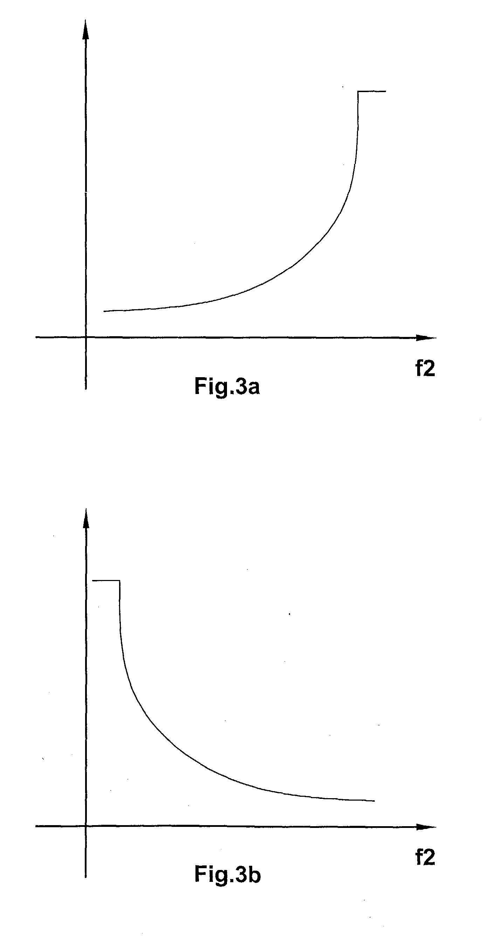

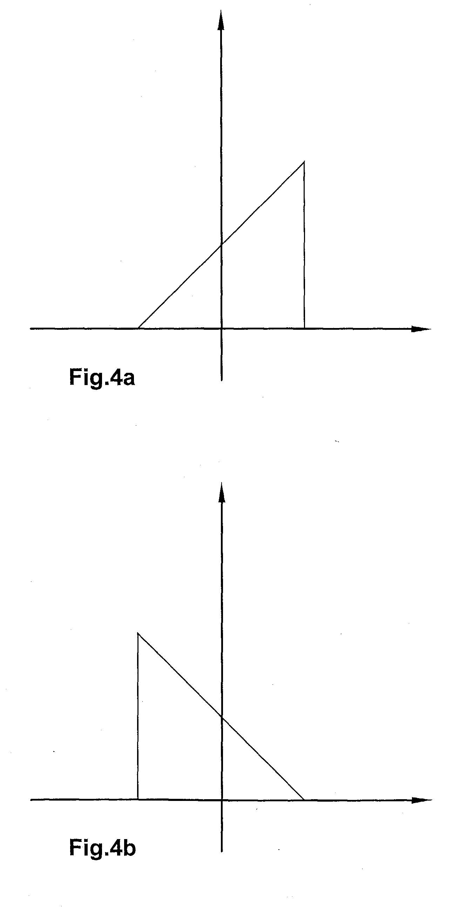

In this connection see Figs. 4a and 3b showing the membership functions "to be an intruder" and "not to be an intruder" for the output variable.

In this way, the process involving use of the fuzzy logic to combine the operating parameters detected with reference to the high-pass matrix (and, more particularly, the variance matrix) enables quite better performance to be obtained as compared with the traditional threshold systems, above all as regards situations in which the intruder is partly hidden or covered by other objects present on the scene.

Conveniently, the process in accordance with the present invention is provided to also comprise a step in which possible time evolutions of the variations present in the second digital image are detected.

For the purpose, subsequently to said second digital image, a plurality of digital images is detected, each of said images representing the area to be monitored (to which reference has been previously made as "predetermined region of space"); a "tracking" algorithm is applied to the digital images thus detected, so that the detected variations in each image are put into mutual relationship.

In other words, by means of this algorithm, the history of each of the variations present in the second image is traced, as long as said images stay in the visual field of the detecting device employed.

The tracking algorithm employed in the preferred embodiment begins with detection of at least three digital images (herein, the second digital image and at least two successive-in-time images); for convenience, the three images will be identified as image A (the second digital image), image B (the image coming immediately after) and image C (the last of the three images in order of time).

Image B will represent a predetermined number of variations with respect to the reference image, i.e. with respect to said first digital image; each of these variations is represented by a smudge within image B.

For each of the smudges held in a respective analysis region, a centroid is identified, i.e. a sort of centre of gravity the co-ordinates of which are calculated depending on the morphological-geometric features of the analysis region.

In particular, the co-ordinates of the centroid are calculated as follows:

$$x_c = \sum_{p(x,y) \in X} x \cdot I_p(x,y)$$

$$y_c = \sum_{p(x,y) \in X} y \cdot I_p(x,y)$$

wherein:

$X_c$, $Y_c$ are the centroid co-ordinates
X represents the analysis region
P(x,y) represents each pixel of the analysis region, having current co-ordinates x, y.

Likewise, in images A and C too the analysis regions are identified, and for each of them a corresponding centroid is identified.

Subsequently, for each of the centroids selected in image B the following steps are performed.

First of all, the centroid of image B is projected both onto image A and onto image C; practically, in images A and C the two points that in these images have the same co-ordinates as the centroid selected in image B are identified.

For each of the two projections, a preferably circular neighbourhood is defined which is centred on the projections themselves; the radius of these circular neighbourhoods corresponds to the maximum permissible distance between corresponding centroids in subsequent photograms. In other words, a limit to the velocity at which a centroid can move is imposed.

Within said neighbourhoods the presence of at least one centroid is verified; should the at least one centroid be detected both in the neighbourhood defined in image A, and in the neighbourhood defined in image C, a triad of points (in particular of centroids) is obtained that are candidate for defining the trajectory in time of the mass centre of the analysis region under examination.

Subsequently, for a further verification, the centroid identified in image C is taken as the reference; this centroid is projected onto image B and, at its projection, a circular neighbourhood is defined which is quite similar to those described above.

Within the last-mentioned neighbourhood obviously there will be the first centroid from which processing started and - it is supposed - another centroid distinct from the preceding one.

Then the two last centroids are projected onto image A and for each projection a respective neighbourhood in the image A itself is defined; by ascertaining the presence of possible centroids within these two neighbourhoods, the centroid already selected in a prior time in image A will be found again and - it is supposed - a second centroid identified in the second neighbourhood.

Thus two possible triads of centroids have been identified that can define an intruder's displacement trajectory within the monitored area.

For selecting the triad that can really correspond to the true motion of an intruder, a cost function is defined; said function is made up of the sum of two contributions: a motion-compatibility contribution that takes vary high values when the trajectories greatly diverge from rectilinear trajectories or when the displacement-velocity module of the centroid is submitted to sharp variations, and a shape-compatibility contribution that takes high values when significant area variations of the considered smudges occur.

Therefore, the triads of points minimising a cost function as the one described above are those that most likely represent the motion of a human within the monitored area.

Once the algorithm has been started in this way, tracking under normal working conditions goes on based on the same criteria and the same parameters: the images are always evaluated in sets of three, trying to identify the possible trajectories of the centroids minimising said cost function.

It is to be pointed out, at all events, that the description proposed above in connection with the tracking algorithm is given by way of example; the same results could be reached through other tracking algorithms.

Advantageously, in the process in accordance with the present invention, at the moment a judgement is expressed on the presence of an intruder on the scene as regards a certain analysis region, it is provided that the judgements previously expressed with reference to the same analysis region should be taken into account.

In other words, after carrying out the above described operations (detection of parameters, tracking, application of fuzzy-logic algorithms), the result obtained after the fuzzy-decoding step is added to the results already associated with that determined path. The membership function of the output variable, in fact, in the preferred embodiment has been defined in such a manner that, in case of intrusion, the output value appears to be positive, whereas in case of non intrusion this value appears to be negative.

Therefore, by carrying out the sum of the detected values at a given path, it is possible to obtain a judgement on a possible intrusion (or non intrusion) that takes into consideration the "history" of such a path, i.e. the previously expressed judgements.

It is important to point out that the process in accordance with the present invention can be carried out both by a hardware apparatus specifically dedicated to the above described image processing, and by a conventional PC, on which an appropriate software is loaded which again runs through the functional steps defining said process.

In particular, the software obtained in accordance with the present invention can be employed through use of a Pentium III at 600MHz for example, provided with a 256MB RAM memory.

This computer is connected to one or more detecting devices (as above mentioned, digital television cameras or webcams are to be considered by way of example), the relevant drivers having been suitably installed; the detected images can therefore be transmitted to the computer that, controlled by the software as above described, processes them and signals possible intrusions to the user, by means of the notification signal. Through this signal the operator is acquainted with the significant movements detected within the monitored area and the membership degree of these movements to the "geometrical variation" category or to the "radiometric variation" category.

While express reference has been hitherto done exclusively to a process for digital image processing and a hardware apparatus set to perform the steps of this method, the invention further extends to software programs, in particular programs for computers, stored on an appropriate medium to put the invention into practice.

The program can be in the form of a source code, object code, partly source and partly object code, or may consist of partly compiled formats or any other form that can be employed to implement the process in accordance with the present invention.

For example, the medium may comprise storage means such as a ROM memory (a CD-ROM, a semi-conductor ROM) or magnetic storage means (floppy disks or hard disks, for example).

In addition, the medium can be a carrier arranged for transmission, such as an electric or optical signal that can be transmitted via electric or optical cables or radio signals.

When the program is incorporated into a signal that can be directly transmitted via a cable, a device or equivalent means, the medium can consist of such a cable, device or equivalent means.

Alternatively, the medium can be an integrated circuit in which the program is incorporated, this integrated circuit being set to put into practice or employ said process in accordance with the present invention.

The invention achieves important advantages.

First of all, the process in accordance with the present invention enables variations of the radiometric type to be discriminated in a practically sure and reliable manner from those of the geometric type, generating corresponding alarm signals only on occurrence of a true intrusion into the monitored region.

In particular, the process in accordance with the present invention enables the presence of intruders to be detected within a predetermined region of space, even if the same are partly hidden or covered by other objects present on the scene.

In addition, since the process in accordance with the present invention is not very complicated and has not a great number of steps, it can be employed on hardware media too that do not have too high computational capacities.

In addition to the above, the process in accordance with the present invention is capable of supplying particularly detailed information concerning the degree of membership to the "intruder" category of the detected variation/s.

An auxiliary advantage of the process in accordance with the present invention is found in the fact that through use of fuzzy-logic algorithms, it is possible to simultaneously operate on several operating parameters without making the computational capacity of the process more complicated in a significant manner.

It will be recognised that a fundamental feature of the process concerns the fact that processing must be carried out in real time and an alarm must be generated as soon as the intrusion is detected; the velocity at which the system is able to operate is therefore critical.

**Claims**

**1.** A process for digital image processing, in particular for applications in the video monitoring field, each of said

**EP 1 443 460 A1**

images representing a predetermined region of space and being defined by a predetermined number of pixels, to each of said pixels being associated at least one brightness parameter representative of a brightness of the pixel associated therewith, said process comprising the following steps:

- detecting a first digital image;
- detecting at least one second digital image;
- comparing said second image with said first image, detecting at least one variation between said first and second images in said predetermined region of space;
- selecting an analysis region including said at least one variation in said digital image, each pixel of said analysis region being associated with a corresponding pixel of said first digital image;

said process being **characterised in that** it further comprises the following steps:

- detecting at least one first operating parameter of said analysis region;
- associating a fuzzy-logic parameter with said first operating parameter, said associating step being performed through a step of applying a first fuzzy-logic algorithm to said first operating parameter, to obtain said fuzzy-logic parameter;
- generating a notification signal representative of said fuzzy-logic parameter.

**2.** A process as claimed in claim 1, **characterised in that** said step of applying the first fuzzy-logic algorithm to said first operating parameter comprises the following sub-steps:

- defining a first operating membership function, associated with said first operating parameter;
- defining a predetermined number of fuzzy-logic rules, associated with said first operating parameter and said first operating membership function;
- defining a main membership function associated with said fuzzy-logic parameter,

said fuzzy-logic parameter being calculated depending on said first operating parameter through said first operating membership function, said fuzzy-logic rules and said main membership function, to represent a degree of geometric character of the variation represented by said analysis region.

**3.** A process as claimed in claim 1 or 2, **characterised in that** it further comprises the following steps:

- detecting a second operating parameter of said analysis region;
- applying a second fuzzy-logic algorithm to said first and second operating parameters to obtain said fuzzy-logic parameter,

said step of applying said second fuzzy-logic algorithm preferably comprising the following sub-steps:

- defining a second operating membership function associated with said second operating parameter;
- defining a predetermined number of auxiliary fuzzy-logic rules associated with said first and second operating parameters and with said first and second operating membership functions,

said fuzzy-logic parameter being calculated depending on said first and second operating parameters through said first and second operating membership functions and said auxiliary fuzzy-logic rules.

**4.** A process as claimed in claims 1, 2 or 3, **characterised in that** said notification signal incorporates a value of said fuzzy-logic parameter.

**5.** A process as claimed in anyone of the preceding claims, **characterised in that** said step of detecting said first and/or second operating parameters comprises a step of carrying out a ratio between the brightness parameters associated with the pixels of the analysis region and the brightness parameters of the corresponding pixels of the first digital image, thereby obtaining a ratio matrix.

**6.** A process as claimed in claim 5, **characterised in that** said step of detecting said first operating parameter comprises a step of carrying out a filtering of the high-pass type of said ratio matrix, thereby obtaining a corresponding high-pass matrix, said filtering step preferably comprising the following steps:

13

- calculating a mean, in particular an arithmetic mean, of said ratios;
- calculating a variance of said ratios, with respect to said mean,

said first operating parameter being a parameter representative of said high-pass matrix.

7. A process as claimed in claim 6, **characterised in that** said step of calculating a mean comprises the following sub-steps:

- selecting a predetermined pixel in said analysis region;
- selecting a predetermined number of auxiliary pixels adjacent to said predetermined pixel, thereby preferably defining a square region centred on said predetermined pixel;
- selecting in said ratio matrix, a predetermined set of ratios, each of which has been obtained as a ratio between the operating parameter associated with each of said auxiliary pixels and the operating parameter associated with each of the pixels of said first image corresponding to said auxiliary pixels;
- calculating a local mean, preferably of the arithmetic type, between the ratios of said predetermined set,

said step of calculating the variance being in particular performed by calculating a local variance, with respect to said local mean, of the ratios of said predetermined set.

8. A process as claimed in claim 7, **characterised in that** the steps listed in claim 6 are repeated by selecting in succession, as the predetermined pixel, all pixels of said analysis region and calculating, for each of them, said local mean and said local variance, thereby obtaining at least one corresponding variance matrix formed of the local variances calculated for each pixel of the analysis region, said variance matrix defining said high-pass matrix.

9. A process as claimed in anyone of claims 6 to 8, **characterised in that** said step of detecting said first operating parameter comprises the following steps:

- applying a first morphological operator to said high-pass matrix, through a first structural element, thereby obtaining a corresponding first intermediate matrix;
- applying a second morphological operator to said high-pass matrix, through a second structural element, thereby obtaining a corresponding second intermediate matrix, said second structural element preferably having a shape and/or at least one dimension different from that of said first structural element;
- comparing said first intermediate matrix with said second intermediate matrix,

said operating parameter being a function of a difference between said first and second intermediate matrices.

10. A process as claimed in claim 9, **characterised in that** said step of detecting said first operating parameter further comprises the following steps:

- calculating a first area of said first intermediate matrix;
- calculating a second area of said second intermediate matrix;
- comparing said first and second areas, preferably through a difference operation, said first operating parameter being a function of the last difference, said first and second areas being calculated as moments of zero order of said first and second intermediate matrices, according to the formula:

$$m = \sum_{p \in X} I_p$$

wherein

m      represents the first or second area
p      represents each pixel of the first or second intermediate matrix
X      represents the first or second intermediate matrix
$I_p$      represents the value of each pixel of the first or second intermediate matrix,

said first operating parameter being most particularly calculated in accordance with the formula:

$$f1 = \frac{m(\Psi_k(Mv)) - m(\Psi_j(Mv))}{m(Mv)}$$

wherein
f1 is the first operating parameter, i.e. the spectrum of order 1
m represents the operation for calculation of the area, i.e. calculation of the moment of zero order
$\psi_k$ represents the morphological-opening operation by use of the first structural element
$\psi_j$ represents the morphological-opening operation by use of the second structural element
Mv represents the high-pass matrix.

11. A process as claimed in claim 9, **characterised in that** said first morphological operator is a morphological opening, said first structural element preferably being of square shape, in particular having a side dimension of 3 pixels.

12. A process as claimed in claim 9 or 10, **characterised in that** said second morphological operator is a morphological opening, said second structural element preferably being of square shape, in particular having a side dimension which is 1 or 2 pixels greater than that of said first structural element, and more preferably a side dimension of 5 pixels.

13. A process as claimed in anyone of claims 5 to 12, **characterised in that** said second operating parameter is a statistical-geometrical parameter of said ratio matrix, said second operating parameter preferably being a function of an area and of a perimeter of said ratio matrix, said second operating parameter being in particular calculated according to the formula:

$$R = \frac{m}{P}$$

wherein

R    is the second operating parameter
m    is the area, i.e. the moment of zero order
P    is the relevant perimeter.

14. A process as claimed in one or more of the preceding claims, **characterised in that** it further comprises the following steps:

- detecting a third operating parameter of said analysis region, said third operating parameter preferably being a parameter representative of said ratio matrix, said third operating parameter in particular being a parameter representative of said high-pass matrix and, more particularly, a parameter representative of said variance ratio;
- applying a third fuzzy-logic algorithm to said first, second and third operating parameters, to obtain said fuzzy-logic parameter,

said step of applying the third fuzzy-logic algorithm preferably comprising the following sub-steps:

- defining a third operating membership function associated with said third operating parameter;
- defining a predetermined number of secondary fuzzy-logic rules, associated with the first, second and third operating parameters and with the first, second and third operating membership functions,

said fuzzy-logic parameter being calculated depending on said first, second and third operating parameters through said first, second and third membership functions and said secondary fuzzy-logic rules.

15. A process as claimed in claim 14, **characterised in that** the step of detecting said third operating parameter comprises:

- applying a third morphological operator to said high-pass matrix, through a third structural element, thereby obtaining a corresponding third intermediate matrix;
- applying a fourth morphological operator to said high-pass matrix, through a fourth structural element;
- comparing said third and fourth intermediate matrices,

said third operating parameter being a function of a difference between said third and fourth intermediate matrices.

16. A process as claimed in claim 15, **characterised in that** the step of detecting said third operating parameter further comprises the following steps:

- calculating a third area of said third intermediate matrix;
- calculating a fourth area of said fourth intermediate matrix;
- comparing said third and fourth areas, preferably through a difference operation, said third operating parameter being a function of the last difference, said third and fourth areas being calculated as moments of zero order of said third and fourth intermediate matrices, in particular in accordance with the formula:

$$m = \sum_{p \in X} I_p$$

wherein

m    represents the third or fourth area
p    represents each pixel of the third or the fourth intermediate matrix
X    represents the third or the fourth intermediate matrix
$I_p$    represents the value of each pixel of the third or the fourth intermediate matrix,

said third operating parameter being more particularly calculated according to the formula:

$$f2 = \frac{m(\Psi_1(Mv)) - m(\Psi_n(Mv))}{m(Mv)}$$

wherein
f2 is the third operating parameter
m represents the operation for calculation of the area, i.e. calculation of the moment of zero order
$\psi_1$ represents the morphological-opening operation with the third structural element
$\psi_n$ represents the morphological-opening operation with the fourth structural element
Mv represents the high-pass matrix.

17. A process as claimed in claim 16, **characterised in that** said third morphological operator is a morphological opening, said third structural element preferably being of square shape, in particular having a side dimension of 5 pixels.

18. A process as claimed in claim 16 or 17, **characterised in that** said fourth morphological operator is a morphological opening, said fourth structural element preferably being of square shape, in particular having a side dimension which is 1 or 2 pixels greater than that of said third structural element, and more particularly a side dimension of 7 pixels.

19. A process as claimed in claims 11 and 17,
**characterised in that** said second and third morphological operators are coincident, said second and third intermediate matrices being substantially coincident.

20. A process as claimed in anyone of the preceding claims, **characterised in that** it further comprises the following steps:

- detecting a plurality of digital images, preferably after said second digital image has been detected;

- applying a tracking algorithm to said digital images, to detect evolutions in time of the variations detected in said second digital image.

21. A program for computer comprising program instructions to make a computer carry out the process in accordance with anyone of claims 1 to 19.

22. A program for computer as claimed in claim 21, incorporated in a portable storage medium and/or stored in a computer memory, and/or stored in a memory of the ROM type, and/or incorporated in an electromagnetic carrier signal.

23. An apparatus for detecting digital images, in particular for applications in the video monitoring field, **characterised in that** it comprises:

- digital-image detecting means;
- a processing unit, set to put into practice the process according to anyone of claims 1 to 20.

24. Use of the apparatus as claimed in claim 23 for detection of intrusions in a video monitoring system.

Fig.1a

Fig.1b

Fig.2a

Fig.2b

19

**Fig.3a**

f2

**Fig.3b**

f2

**Fig.4a**

**Fig.4b**

**European Patent Office**

# EUROPEAN SEARCH REPORT

Application Number

EP 03 42 5064

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TOSHINARA NONAKA ET AL: "A MOVING OBJECT EXTRACTION USING ADAPTIVE FRAME INTEGRATION" SYSTEMS & COMPUTERS IN JAPAN, SCRIPTA TECHNICA JOURNALS. NEW YORK, US, vol. 24, no. 14, 1 December 1993 (1993-12-01), pages 29-37, XP000474590 ISSN: 0882-1666 * page 31, right-hand column, paragraph 3.1 * * page 32, left-hand column, paragraph 4.1 - page 33, right-hand column, paragraph 5 * --- | 1,2,4 | G06T7/20 G08B13/194 |
| X | GUSTIN V ET AL: "MOTION DETECTION USING FUZZY LOGIC COMPARATOR" IEEE TRANSACTIONS ON CONSUMER ELECTRONICS, IEEE INC. NEW YORK, US, vol. 41, no. 2, 1 May 1995 (1995-05-01), pages 360-365, XP000520195 ISSN: 0098-3063 * page 362, left-hand column, line 1 - right-hand column, line 31; figure 1 * --- | 1 | |
| A | EP 0 735 754 A (APPLIED MATERIALS INC) 2 October 1996 (1996-10-02) * abstract * ----- | 1 | TECHNICAL FIELDS SEARCHED (Int.Cl.7) G06T G08B H04N |

The present search report has been drawn up for all claims

| Place of search | Date of completion of the search | Examiner |
|---|---|---|
| THE HAGUE | 10 November 2003 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 443 460 A1**

**ANNEX TO THE EUROPEAN SEARCH REPORT
ON EUROPEAN PATENT APPLICATION NO.**

EP 03 42 5064

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2003

| Patent document cited in search report | | Publication date | Patent family member(s) | | Publication date |
|---|---|---|---|---|---|
| EP 0735754 | A | 02-10-1996 | EP | 0735754 A2 | 02-10-1996 |
| | | | JP | 8289244 A | 01-11-1996 |
| | | | US | 5812732 A | 22-09-1998 |

EPO FORM P0459

For more details about this annex : see Official Journal of the European Patent Office, No. 12/82

23